# EUROPÄISCHE PATENTSCHRIFT

(11) **EP 3 003 918 B1**
(45) Veröffentlichungstag und Bekanntmachung des Hinweises auf die Patenterteilung: **20.12.2017**
(21) Anmeldenummer: 14728168.7
(22) Anmeldetag: 02.06.2014
(51) Int. Cl.: B65G 1/137

(54) **LAGER- UND/ODER KOMMISSIONIERSYSTEMS MIT SCHWENKBAREN TABLAREHANDHABUNGSEINRICHTUNGEN**
STORAGE AND/OR ORDER-PICKING SYSTEM WITH TRAYS PIVOTAL HANDLING DEVICES
SYSTÈME DE STOCKAGE ET/OU DE PRÉPARATION DE COMMANDES AVEC DES DISPOSITIFS DE MANUTENTION DE BACS PIVOTANT

(30) Priorität: 31.05.2013 DE 102013210196
(43) Veröffentlichungstag der Anmeldung: 13.04.2016
(73) Patentinhaber: Kardex Produktion Deutschland GmbH, 86476 Neuburg/Kammel (DE)
(72) Erfinder: SCHÄFFLER, Reinhold, 86480 Waltenhausen-Weiler (DE); FANKHÄNEL, Jens, CH-8305 Dietlikon (CH); SCHLEICHER, Manfred, 97274 Leinach (DE)
(74) Vertreter: Grünecker Patent- und Rechtsanwälte PartG mbB
(86) Internationale Anmeldenummer: PCT/EP2014/061385
(87) Internationale Veröffentlichungsnummer: WO 2014/191577

(56) Entgegenhaltungen:
- WO-A1-03/024845
- WO-A1-2005/066046
- DE-A1-102011 018 983
- US-A- 4 909 697

## Beschreibung

Die Erfindung betrifft ein automatisches Lager- und/oder Kommissioniersystem mit einer Transportbahn zum Fördern von Tablaren und einem Arbeitsplatz zur manuellen Entnahme von Lagergut aus Tablaren durch Bedienpersonal. Aus dem Dokument US 4,909,697 ist ein automatisches Lager- und Kommissioniersystem nach dem Oberbegriff des Anspruchs 1 bekannt.

Üblicherweise wird von Bedienpersonal zum Kommissionieren oder zum Ein- und Auslagern von Waren auf den Inhalt von Tablaren eines Lager- und /oder Kommissioniersystems zugegriffen, wenn sich diese auf Plattformen befinden. Derartige Plattformen können Teil einer Transportbahn der Tablare sein, entlang der sie zwischen einzelnen Kommissionierstationen oder zum Ein- oder Auslagern in automatische Lagervorrichtungen, wie beispielsweise Lagerlifte oder Paternoster, gefördert werden. Die Plattformen können auch Teil von Beschickungs- und/oder Entnahmeöffnungen sein, durch die hindurch die Tablare in die oder aus der Lagervorrichtung bewegt werden.

Nachteilig ist, dass die Ergonomie derartiger Plattformen oft zu wünschen übrig lässt. Außerdem müssen derartige Plattformen oft aufwendig gesichert werden, damit das Bedienpersonal nicht versehentlich in die Transportbahn greift. Die Transportbahn stellt im Betrieb eines Lager- und/oder Kommissioniersystems ein hohes Gefahrenpotential dar.

Der Erfindung liegt folglich die Aufgabe zugrunde, ein Lager- und/oder Kommissioniersystem der eingangs genannten Art ergonomischer und sicherer auszugestalten.

Diese Aufgabe wird für das eingangs genannte Lager- und/oder Kommissioniersystem erfindungsgemäß dadurch gelöst, dass sich zwischen der Transportbahn und dem Arbeitsplatz mehrere Handhabungseinrichtungen entlang der Transportbahn befinden, und dass die Handhabungseinrichtungen jeweils eine Tablarhalterung für wenigstens ein Tablar aufweisen, wobei jede Tablarhalterung von einer horizontalen Ladestellung, in der die Tablarhalterung an die Transportbahn zur Übergabe von Tablaren ankoppelbar ist, in eine horizontal von der Ladestellung beabstandete Zugriffsstellung schwenkbar angeordnet ist, wobei die Schwenkbewegung senkrecht zur Förderrichtung der Transportbahn verläuft, und dass die Tablarhalterung in der Zugriffsstellung von der Ladestellung wegweisend geneigt ist.

Diese konstruktiv einfache Lösung bietet zwei Vorteile: Die Zugriffsstellung, in der Bedienpersonal auf den Tablarinhalt zugreifen kann, ist horizontal von der Ladestellung beabstandet, so dass der Arbeitsplatz in einer sicheren Entfernung von der Transportbahn angeordnet werden kann. Spezielle Sicherungsmaßnahmen, damit das Bedienpersonal nicht in die Transportbahn fassen kann, entfallen folglich. Außerdem vereinfacht die geneigte Lage der Tablarhalterung in der Zugriffsstellung den Zugriff auf den Tablarinhalt durch das Bedienpersonal insbesondere bei tiefen und hohen Tablaren. Das Bedienpersonal muss sich nicht mehr über das Tablar beugen, um an den hinten oder unten gelegenen Tablarinhalt zu gelangen, denn dieser ist durch die geneigte Stellung leichter zugänglich und näher an der Bedienperson.

Die Erfindung kann durch eine Reihe von voneinander unabhängigen, jeweils für sich vorteilhaften und beliebig miteinander kombinierbaren Weiterbildungen, wie sie im Folgenden beschrieben sind, weiter verbessert werden.

So kann gemäß einer ersten vorteilhaften Ausgestaltung die Tablarhalterung in der Ladestellung oberhalb der Zugriffsstellung liegen. Dies kann die Sicherheit des Lager- und/oder Kommissioniersystems weiter erhöhen, denn die Ladestellung und gegebenenfalls die daran ankoppelbare Transportbahn können so im Blickfeld des Bedienpersonals oder gar über Kopfhöhe liegen. Dies verringert das Risiko, dass das Bedienpersonal in eine Tablarhalterung in der Ladestellung hineingreift oder in die Transportbahn hineinläuft. Durch die Schwenkbewegung von der Lade- in die Zugriffsstellung kann ein Höhenunterschied zwischen der Transportbahn und der Zugriffsstellung ausgeglichen werden, so dass trotz einer erhöhten Position der Ladestellung die Zugriffsstellung in ergonomisch günstiger Höhe angeordnet sein kann. Falls durch die Handhabungseinrichtung größere horizontale Strecken überwunden werden müssen, kann die Tablarhalterung teleskopisch ausfahrbare Elemente umfassen, beispielsweise einen Teleskopauszug.

Die Handhabungseinrichtung kann stationär ausgestaltet sein. Sie kann aber auch in die Plattform einer Beschickungs- und/oder Entnahmeöffnung oder in einen entlang der Transportbahn beweglichen Förderwagen für Tablare integriert sein. Mehrere Handhabungseinrichtungen sind erfindungsgemäß entlang der Transportbahn angeordnet, so dass ein gleichzeitiger Zugriff auf eine Vielzahl von Tablaren möglich ist. Die Handhabungseinrichtung kann auch als eine mobile, beispielsweise auf Rädern verschiebliche, Einheit ausgestaltet sein. Dies erlaubt es, sie je nach Bedarf an unterschiedlichen Stellen der Transportbahn anzukoppeln und die Kommissionierung flexibler zu gestalten.

Die Tablarhalterung kann im Wesentlichen eine Plattform aufweisen, auf der das Tablar abgelegt ist. Selbstverständlich sind auch andere Möglichkeiten umsetzbar, wie beispielsweise Führungsschienen, um ein Tablar in oder auf die Tablarhalterung zu überführen und dort zu halten. Die Tablarhalterung kann ferner eine Halteeinrichtung zur Fixierung des Tablars aufweisen, so dass das Tablar wenigstens in der Zugriffsstellung fixiert ist. Die Halteeinrichtung kann fernsteuerbar ausgestaltet sein. Dadurch lässt sich beispielsweise die Halterung von einer zentralen Steuerung des Lager- und/oder Kommissioniersystems und/oder von einem Arbeitsplatz aus steuern.

Nach einer weiteren vorteilhaften Ausgestaltung ist vorgesehen, dass die Handhabungseinrichtung einen vorzugsweise elektrischen Antriebsmotor zum Schwenken der Tablarhalterung umfasst. Eine motorgestützte Verschwenkung der Tablarhalterung erhöht insbesondere bei schweren Tablaren die Sicherheit. Zur Steuerung des Antriebmotors durch eine Steuerung des Lager- und/oder Kommissioniersystems kann die Handhabungseinrichtung eine elektrische Schnittstelle aufweisen, die mit einer zentralen Steuerung des Lager- und/oder Kommissioniersystems verbindbar ist.

Wenn in der Ladestellung eine zur Zugriffsstellung weisende Vorderseite der Tablarhalterung wenigstens eine Armlänge von ihrer Lage in der Zugriffsstellung beabstandet ist, lässt sich die Sicherheit der Handhabungseinrichtung deutlich erhöhen, denn bei dieser Ausgestaltung ist es nicht mehr möglich, von einem Arbeitsplatz aus in die Ladestellung oder gar in eine vom Arbeitsplatz aus gesehen hinter der Ladestellung verlaufende Transportbahn zu greifen.

Die Armlänge, hier eines Erwachsenen, richtet sich dabei nach dem jeweiligen nationalen oder regionalen Standard für ergonomische Körpermaße. Ein solcher Standard orientiert sich üblicherweise an statistischen, für die jeweilige Bevölkerung repräsentativen Körpermaßen. Diese Körpermaße können in den verschiedenen Regionen der Welt je nach den Durchschnittsmaßen der Bevölkerung unterschiedlich sein. Im europäischen Raum ist die Armlänge beispielsweise für unterschiedliche Perzentilen in DIN 33402 angegeben. Der Abstand zwischen der Lade- und der Zugriffsstellung beträgt wenigstens den Wert der Armlänge bei der 50 % Perzentile, bevorzugt wenigstens der 5 % Perzentile der jeweiligen nationalen oder regionalen Norm. In absoluten Maßen angegeben kann der Abstand zwischen der Lade- und der Zugriffsstellung wenigstens etwa 75 cm, bevorzugt wenigstens etwa 80 cm betragen. Damit die Kommissionierung aufgrund einer langhubigen Schwenkbewegung nicht zu lange dauert, sollte der Verfahrweg von der Lade- in die Zugriffsstellung nach Möglichkeit nicht über etwa einem Meter liegen, ansonsten dauert die Schwenkbewegung zu lange.

Nach einer weiteren vorteilhaften Ausgestaltung kann ein auf der Tablarhalterung gehaltenes Tablar in der Zugriffsstellung von oben und von vorne, also von der der Ladestellung abgewandten Seite - dies ist bevorzugt die Seite, auf der sich der Arbeitsplatz befindet -, zugänglich gekippt sein. Diese Kippstellung des Tablars erleichtert den Zugriff auf seinen Inhalt erheblich, insbesondere bei tiefen oder hohen Tablaren, deren Tiefe nahezu oder mehr als eine Armlänge beträgt. Die Tablare weisen bevorzugt eine Tiefe von wenigstens etwa 50 cm bis hin zu etwa 80 cm oder 1 m auf. Um einen nicht zu großen Kippwinkel erforderlich zu machen, beträgt die Tiefe der Tablare bevorzugt höchstens 1,5 m. Der Neigungswinkel der Tablare in der Zugriffsstellung kann zwischen 30° und 60° liegen.

In der Ladestellung ist das Tablar bevorzugt horizontal ausgerichtet, so dass es ohne Änderung seiner Ausrichtung vorzugsweise automatisch von der Transportbahn in die Ladestellung überführt werden kann.

Die Handhabungseinrichtung kann eine mit einem Tablar in Eingriff bringbar ausgestaltete Überführungseinrichtung aufweisen, durch die das Tablar in der Ladestellung insbesondere von der Transportbahn auf oder in die Tablarhalterung bewegbar ist. Die Überführungseinrichtung kann beispielsweise einen mit Mitnehmer versehenen Zugmitteltrieb und/oder einen Linearantrieb, auch mit Teleskoparmen oder Schlitten, aufweisen. Mit Hilfe der Überführungseinrichtung kann das Tablar zwischen der Transportbahn und der Tablarhalterung hin und her geschoben und/oder gezogen werden. Die Überführungseinrichtung kann über eine elektrische Schnittstelle über die zentrale Steuerung des Lager- und/oder Kommissioniersystems betätigbar ausgestaltet sein und ein elektrisches Antriebsmittel aufweisen. Dies erlaubt eine Synchronisation mit den übrigen Tätigkeiten des Lager- und/oder Kommissioniersystems. Auch eine Fernbedienung der Überführungseinrichtung von einem Arbeitsplatz aus kann möglich sein. Die Überführungseinrichtung kann gleichzeitig als Halteeinrichtung dienen, wenn sie ausgestaltet ist, im Stillstand das Tablar zu fixieren.

Die Handhabungseinrichtung ist bevorzugt als ein dem erfindungsgemäßen Lager- und/oder Kommissioniersystem einteilig hinzufügbares Modul ausgestaltet, das lediglich an die Energieversorgung und die Steuerung des Lager- und/oder Kommissioniersystems angeschlossen werden muss und dann funktionsfähig ist.

Die Ausgestaltung als Moduleinheit erlaubt es, das Lager- und/oder Kommissioniersystem einfach um eine oder mehrere Handhabungseinrichtungen zu ergänzen, ohne große konstruktive Änderungen am bestehenden System durchführen zu müssen.

Die Handhabungseinrichtung in einer der oben genannten Ausgestaltungen ist erfindungsgemäß Teil eines automatischen Kommissionier- und Lagersystems mit einer Transportbahn zum Fördern von Tablaren und einem Arbeitsplatz zur manuellen Entnahme von Lagergut aus Tablaren durch Bedienpersonal. In diesem solchen Kommissionier- und Lagersystem sind mehrere Handhabungseinrichtungen zwischen der Transportbahn und dem Arbeitsplatz angeordnet.

Die Transportbahn kann in einer speziellen Ausgestaltung an einer Beschickungs- und Entnahmeöffnung einer Lagereinrichtung, wie einem Lagerlift und/oder einem Paternoster enden und die Handhabungseinrichtung kann sich außerhalb der Lagervorrichtung insbesondere unmittelbar an die Beschickungs- und Entnahmeöffnung anschließen, so dass von dort die Tablare direkt auf die Tablarhalterung der Handhabungseinrichtung bewegt werden können.

Die Transportbahn kann aber auch mehrere Lagervorrichtungen miteinander verbinden. Bevorzugt befinden sich mehrere Handhabungseinrichtungen nebeneinander entlang der Transportbahn, wobei die Schwenkbewegung senkrecht zur Förderrichtung entlang der Transportbahn verläuft. Eine solche Anordnung ist beispielsweise bei der sortenreinen Lagerung von Lagergut sinnvoll, wenn zur Kommissionierung von einem oder mehreren Arbeitsplätzen aus gleichzeitig auf mehrere Tablare zugegriffen werden muss.

In der Zugriffsstellung erstreckt sich ein Tablar gemäß einer weiteren vorteilhaften Ausgestaltung unterhalb der Transportbahn, insbesondere unterhalb 150 cm, besser 120 cm. Um einen ergonomischen Zugriff zu gewähren, befindet sich das Tablar jedoch bevorzugt oberhalb einer Höhe von 80 cm.

Vom Arbeitsplatz aus betrachtet kann das Tablar in der Ladestellung in einer Höhe von wenigstens 120 cm, bevorzugt wenigstens 150 cm angeordnet sein.

Zwischen dem Arbeitsplatz und der Zugriffsstellung kann noch eine weitere Förderbahn angeordnet sein, die der Beförderung von kommissionierter Ware dient. Diese Kommissionierbahn liegt bevorzugt unterhalb der Tablare in der Zugriffsstellung und verläuft insbesondere senkrecht zur Schwenkbewegung, um nicht bei einem Zugriff auf den Tablarinhalt in der Zugriffsstellung im Wege zu stehen. Die Förderbahn stellt eine weitere Barriere dar, die den Zugriff des Bedienpersonals auf die Transportbahn verhindert.

Im Folgenden ist die Erfindung anhand von Zeichnungen und unterschiedlichen Ausführungsformen beispielhaft erläutert. Die unter Bezugnahme auf die Zeichnungen erläuterte Merkmalskombination kann jedoch nach Maßgabe der obigen Ausführungen abgeändert werden. So kann beispielsweise auf einzelne Merkmale der dargestellten Handhabungseinrichtung verzichtet werden, wenn diese Merkmale bei einer bestimmten Anwendung keinen wesentlichen Vorteil bieten. Umgekehrt kann eines der oben beschriebenen Merkmale hinzugefügt werden, wenn der mit diesem Merkmal verbundene Vorteil für die jeweilige Anwendung notwendig ist.

In den Zeichnungen und der nachstehenden Beschreibung werden bei unterschiedlichen Ausführungsformen für Elemente, die hinsichtlich Funktion und/oder Aufbau ähnlich sind, dieselben Bezugszeichen verwendet.

Es zeigen:
- Fig. 1: eine schematische Querschnittsansicht eines erfindungsgemäßen Lager- und Kommissioniersystems mit einer ersten Ausführungsform einer Handhabungseinrichtung;
- Fig. 2: das Lager- und Kommissioniersystem der Fig. 1 in einer schematischen Ansicht von oben;
- Fig. 3: eine weitere Ausführungsform der Handhabungseinrichtung in einer schematischen Querschnittsansicht;
- Fig. 4: eine weitere Ausführungsform der Handhabungseinrichtung in einer schematischen Querschnittsansicht.

Zunächst wird der Aufbau einer zum erfindungsgemäßen Lager- und/oder Kommissioniersystem 5 gehörenden Handhabungseinrichtung 1 beschrieben, mit der Tablare 3 des Kommissionier- und Lagersystems 5 für den manuellen Zugriff durch Bedienpersonal 7 bereitgestellt werden. Die Handhabungseinrichtung 1 ist an eine Transportbahn 9 anschließbar ausgestaltet bzw. angeschlossen, so dass die Tablare 3 von der Transportbahn 9 auf oder in die Handhabungseinrichtung 1 und wieder zurück transportiert werden können. Die Transportbahn 9 setzt sich aus den Transportwegen zusammen, die die Tablare 3 im Lager- und/oder Kommissioniersystem 5 zurücklegen, die Handhabungseinrichtung ist nicht als Teil der Transportbahn anzusehen.

Die Transportbahn 9 kann insbesondere eine Beschickungs- und/oder Entnahmeöffnung einer Lagervorrichtung 15 umfassen. Durch die Beschickungs- und/oder Entnahmeöffnung 13 werden die Tablare 3 mit darauf angeordnetem Lagergut 17 in die Lagervorrichtung 15, beispielsweise einen automatischen Lagerlift oder einen automatischen Paternoster, eingelagert, oder aus der Lagervorrichtung 15 ausgelagert.

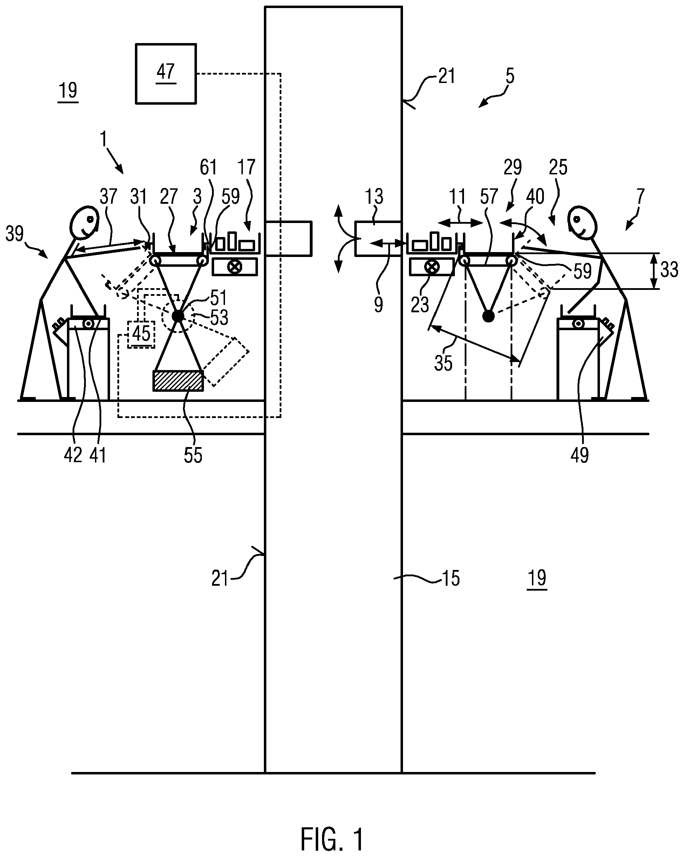

Lediglich beispielhaft erstreckt sich bei dem Ausführungsbeispiel der Fig. 1 die Lagervorrichtung 15 über zwei Stockwerke 19. Ebenfalls lediglich beispielhaft ist an den beiden gegenüberliegenden Seiten 21 der Lagervorrichtung 15 jeweils wenigstens eine Handhabungseinrichtung 1 angeordnet.

Die Transportbahn 9 kann ein Förderband 23 aufweisen, entlang dem die Tablare 3 zu einer Beschickungs- und/oder Entnahmeöffnung 13 und/oder einer Handhabungseinrichtung 1 gefördert werden. In der Fig. 1 ist gezeigt, dass die Handhabungseinrichtung 1 an das Förderband 23 angekoppelt ist. Die Handhabungseinrichtung 1 kann jedoch auch direkt an die Beschickungs- und/oder Entnahmeöffnung 13 einer Lagervorrichtung 15 angekoppelt sein.

Die Handhabungseinrichtung 1 ermöglicht in einer Zugriffsstellung 25 den manuellen Zugriff auf das Innere der Tablare 3 bzw. das Lagergut 17 durch das Bedienpersonal 7, beispielsweise zum Kommissionieren.

Die Handhabungseinrichtung 1 ist mit einer Tablarhalterung 27 versehen, in oder auf der ein oder mehrere Tablare 3 gehalten sind. Die Tablarhalterung 27 ist zusammen mit dem durch sie gehaltenen Tablar 3 zwischen der Zugriffsstellung 25 und einer Ladestellung 29 schwenkbar. In der Ladestellung 29 ist die Tablarhalterung 27 bzw. das von ihre gehaltene Tablar 3 horizontal ausgerichtet und so an die Transportbahn ankoppelt, dass das Tablar 3 von der Transportbahn 9 auf die Tablarhalterung 27 oder umgekehrt überführt werden kann. In der Zugriffsstellung 25 sind die Tablarhalterung 27 und das von ihr gehaltene Tablar 3 von der Ladestellung 29 weggekippt, so dass sie von der Ladestellung 29 weg weisen. Dies ermöglicht den Zugriff auf das Innere des Tablars 3 durch das Bedienpersonal 7 von vorne und von oben. Durch die Kippstellung des Tablars 3 ist auch der hintere, der Ladestellung 29 zugewandte Bereich 31 eines Tablars gut und durch das Bedienpersonal 7 einsehbar angeordnet. Aufgrund der Kippstellung kann selbst auf Tablare mit großer Tiefe von mehr als 50 cm bis hin zu Tiefen von etwa 80 cm oder 1 m zugegriffen werden.

Die Kippbewegung der Tablarhalterung 27 bzw. des Tablars 3 führt außerdem dazu, dass ein Höhenunterschied 33 zwischen der Transportbahn 9 und der Zugriffsstellung 25 überwunden werden kann und dass sich die Transportbahn 9, entlang der sich die Tablare 3 bewegen und die demzufolge ein hohes Sicherheitsrisiko darstellt, in einem sicheren Abstand 35 von der Zugriffsstellung 33 und damit dem Bedienpersonal 7 befindet. Der Abstand 35 beträgt wenigstens eine Armlänge 37, so dass das Bedienpersonal 7 von einem Arbeitsplatz 39 aus, von dem der Zugriff auf das Tablar 3 in der Zugriffsstellung 25 erfolgt, nicht in das Transportband langen kann. Um den Zugriff durch das Bedienpersonal 7 auf die Tablarhalterung 27 oder ein Tablar 3 in der Ladestellung 29 zu verhindern, ist eine dem Arbeitsplatz 39 zugewandte bzw. zur Zugriffsstellung 25 weisende Vorderseite 40 der Tablarhalterung 27 in der Ladestellung 29 wenigstens eine Armlänge 37 von ihrer Lage in der Zugriffsstellung beabstandet.

Die Armlänge 37 ergibt sich aus einer statistischen Erfassung der nationalen bzw. regionalen Körpermaße, hier von Erwachsenen. Diese Körpermaße können in nationalen oder regionalen Ergonomienormen in Abhängigkeit von Bevölkerungsperzentilen festgelegt sein. So kann die Armlänge der 50 %-Perzentile, also die Armlänge, die 50 % der erwachsenen Bevölkerung überschreiten oder die Armlänge der 5 %-Perzentile, also die Armlänge, die 5 % der Bevölkerung überschreiten, angegeben sein. In Deutschland sind diese Maße beispielsweise in der DIN 33402 enthalten. Der Abstand 35 ist bevorzugt größer als die Armlänge der 5 %-Perzentile nach DIN 33402. Weiter bevorzugt kann der Abstand 35 größer als 75 cm, besser 80 cm sein. Am Arbeitsplatz 39 führt das Bedienpersonal Kommissionierarbeiten aus, beispielsweise indem ein Kommissionierbehälter 41 mit Lagergut 17 aus einem oder mehreren Tablaren 3 befüllt und entlang eines Kommissionierbandes 42 bewegt wird. In Richtung des Kommissionierbandes 43 können mehrere Handhabungseinrichtungen 1 vorhanden sein, wobei bei einer sortenreinen Lagerung der Kommissionierbehälter 41 an jeder Handhabungseinrichtung nur mit bestimmtem Lagergut 17 befüllt wird, so dass mehrere Handhabungseinrichtungen notwendig sind, um unterschiedliches Lagergut 17 zu kommissionieren. Jede Handhabungseinrichtung 1 ist stationär und bevorzugt als ein Modul aufgebaut, das als eine Einheit an das Lager- und/oder Kommissioniersystem 5 angeschlossen werden kann. Die Handhabungseinrichtung 1 kann mit einer eigenen Steuerungseinrichtung oder einer elektrischen Schnittstelle 45 versehen sein, die mit einer Steuereinheit 47 des Lager- und Kommissioniersystems 47 datenübertragend verbunden werden kann. Durch die Einbindung der Handhabungseinrichtung 1 in die Steuerung des gesamten Lager- und Kommissioniersystems 5 können die Bewegungen der Handhabungseinrichtung 1 mit der Bewegung der Tablare im gesamten Kommissionier- und Lagersystem synchronisiert werden. Die Handhabungseinrichtung 1 kann ferner eine vom Arbeitsplatz 39 aus zugängliche oder separate Fernsteuerung 49 aufweisen, durch die beispielsweise die Schwenkbewegung von der Ladestellung 29 in die Zugriffsstellung 25 und zurück initiiert und/oder Tablare 3 von der Transportbahn 9 oder den Lagereinrichtungen 15 angefordert oder zu diesen zurückgeschickt werden können. In einer einfachen Variante der Handhabungseinrichtung 1 ist auch eine rein manuelle Betätigung, wie ein Verschwenken von Hand denkbar, wobei die Bestückung der Handhabungseinrichtung 1 mit einem Tablar 3 von der Transportbahn bevorzugt automatisch erfolgt. Um einen Bestückungsvorgang auszulösen, kann die Handhabungseinrichtung 1 mit einem bevorzugt einfachen Signalgeber (nicht gezeigt) versehen sein. Der Signalgeber kann ähnlich wie die Fernsteuerung 49 funktionieren.

Eine Schwenkachse 51, um die herum die Tablarhalterung 27 von der Zugriffsstellung 25 in die Ladestellung 29 schwenkbar ist, befindet sich bevorzugt unterhalb der Ladestellung 29 und der Zugriffsstellung 25 bzw. der Tablarhalterung 27. Die Schwenkbewegung kann durch einen vorzugsweise elektrischen Antriebsmotor 53 angetrieben sein, wobei allerdings auch ein manuelles Verschwenken durch das Bedienpersonal 7 mit oder ohne Antriebsmotor 53 eine mögliche Variante darstellt. Ein Gegengewicht 55, das das Gewicht des Tablares 3 und des darin enthaltenen Lagerguts 17 ausgleicht, kann die zum Verschwenken benötigte Kraft verringern.

Der Antriebsmotor 53 ist bevorzugt über die Steuereinrichtung oder Schnittstelle 45 mit der Steuereinheit 47 des Lager- und Kommissioniersystems 5 verbunden.

Die Handhabungseinrichtung 1 kann ferner mit einer Überführungseinrichtung 57 ausgestattet sein. Die Überführungseinrichtung 57 kann, wie in Fig. 1 schematisch gezeigt, in Form eines Zugmitteltriebs, oder in Form von Lineartrieben oder teleskopischen Elementen ausgestaltet sein. Die Überführungseinrichtung 57 ist mit wenigstens einem Mitnehmer 59 versehen, der formschlüssig mit einem Tablar 3 in Eingriff bringbar ist. So sind die Tablare 3 mit einem zum Mitnehmer 59 komplementären Gegenelement 61 ausgestattet.

Die Überführungseinrichtung 57 bringt zur Überführung den Mitnehmer 59 mit einem Tablar 3 in der Transportbahn 9 in Eingriff und bewegt dann das erfasste Tablar auf oder in die Tablarhalterung 27. Vorzugsweise bleibt die Überführungseinrichtung 57 auch dann im Eingriff mit dem Tablar 3 auf oder in der Tablarhalterung 27, wenn sich das Tablar 3 vollständig auf oder in der Handhabungseinrichtung 1 befindet. In einem solchen Fall dient die Überführungseinrichtung 57 gleichzeitig als Halteeinrichtung, indem sie das Tablar 3 in der Tablarhalterung 27 fixiert. Selbstverständlich kann jedoch auch eine zusätzliche separate Halteeinrichtung vorgesehen sein, welche das vollständig auf oder in die Tablarhalterung 27 bewegte Tablar 3 gegen Verschieben sichert.

Die Überführungseinrichtung 57, wie auch eine gegebenenfalls vorhandene Halteeinrichtung, sind bevorzugt ebenfalls an die Steuerungseinrichtung oder Schnittstelle 45 angeschlossen, so dass ihre Bedienung über die Steuereinheit 47 möglich ist.

Die Verwendung einer Handhabungseinrichtung 1 bietet neben einem ergonomischen Zugriff auch auf tiefe Tablare und einer automatischen Beabstandung des Bedienpersonals 7 von der Transportbahn 9 auch den Vorteil, dass die Transportbahn 9 auf einer anderen Höhe verlaufen kann, als dies für einen Zugriff auf die Tablare 3 notwendig ist. Dies erlaubt es, den Verlauf der Transportbahn 9 und/oder die Lage der Beschickungs- und/oder Entnahmeöffnung zu optimieren. So kann in der Zugriffsstellung 25 ein Tablar 3 unterhalb der Transportbahn 9 liegen. Ferner kann, vom Arbeitsplatz 39 aus betrachtet, die Kommissionierbahn in einer Höhe von wenigstens 120 cm oder gar wenigstens 150 cm, oder sogar über Kopfhöhe des Bedienpersonals 7 verlaufen. Die Anordnung der Transportbahn 9 im unmittelbaren Sichtbereich oder über Kopfhöhe erhöht die Sicherheit, weil die Transportbahn 9 entweder in einem Bereich positioniert werden kann, in dem sie schnell und sicher erkannt wird, oder außerhalb der Reichweite liegt. In der Zugriffsstellung kann sich das Tablar dagegen bevorzugt unterhalb einer Höhe von 150 cm, jedoch vorteilhaft oberhalb 80 cm befinden, so dass es in einem ergonomisch günstigen Bereich liegt.

Lediglich beispielhaft ist in Fig. 1 die Tablarhalterung 27 einfach um die Schwenkachse 51 schwenkbar. Falls größere Höhenunterschiede 33 zwischen der Ladestellung 29 und der Zugriffsstellung 25 oder größere Abstände 35 bei einer relativ geringen Schwenkbewegung zu überwinden sind, kann auch ein Gestänge verwendet werden, so dass bei einer kleinen Schwenkbewegung größere Höhendifferenzen oder größere Horizontalabstände überwunden werden können.

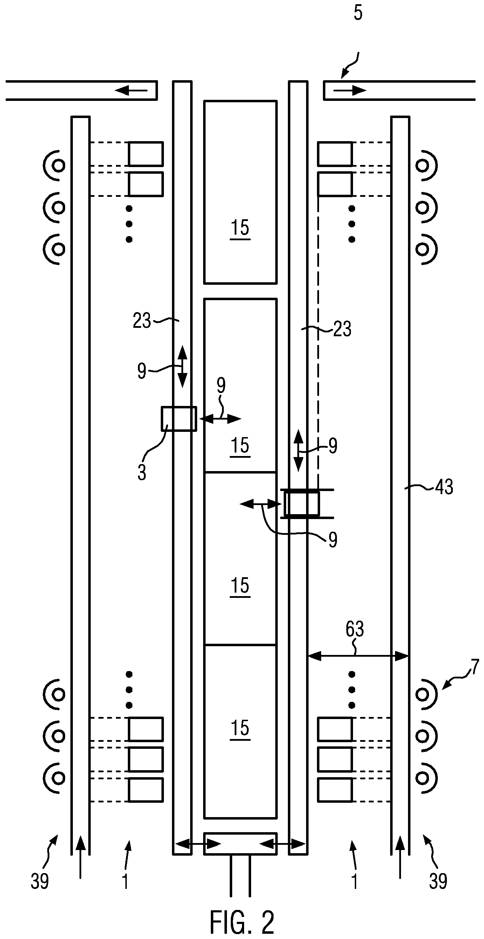

Fig. 2 zeigt, dass eine bevorzugte Ausführungsform des Kommissionier- und Lagersystems 5 eine Vielzahl von nebeneinander angeordneten Handhabungseinrichtungen 1 aufweist, die an die Transportbahn 9, hier ein entlang einer Reihe von Lagervorrichtungen 15 verlaufenden Förderband 23 angekoppelt sind. Das Bedienpersonal 7 führt an jeder der Handhabungseinrichtungen 1 einen Teilauftrag einer Warenkommissionierung durch. Die Arbeitsplätze 39 sind in einem Abstand 63 von der Transportbahn 9 angeordnet und bevorzugt zusätzlich durch das Kommissionierband voneinander getrennt. Der Abstand 63 ist größer als der Abstand 35, so dass das Bedienpersonal 7 sicher von der Transportbahn 9 getrennt ist.

Im obigen Ausführungsbeispiel ist die Handhabungseinrichtung 1 lediglich beispielhaft als stationäre Einrichtung dargestellt. Sie kann in einer doppelt strichpunktiert angedeuteten Variante jedoch auch als mobile Einheit 65, die beispielsweise auf Rädern 67 verschieblich ist, ausgestaltet sein. Diese Variante erlaubt es, die Handhabungseinrichtung 1 dort an die Transportbahn 9 anzukoppeln, wo sie für einen bestimmten Kommissionierauftrag benötigt wird. Die Transportbahn 9 ist bei einer solchen Ausgestaltung bevorzugt mit Ankoppelstellen versehen, an denen eine mechanische Verbindung zwischen der Transportbahn 9 und der Handhabungseinrichtung 1 hergestellt werden kann.

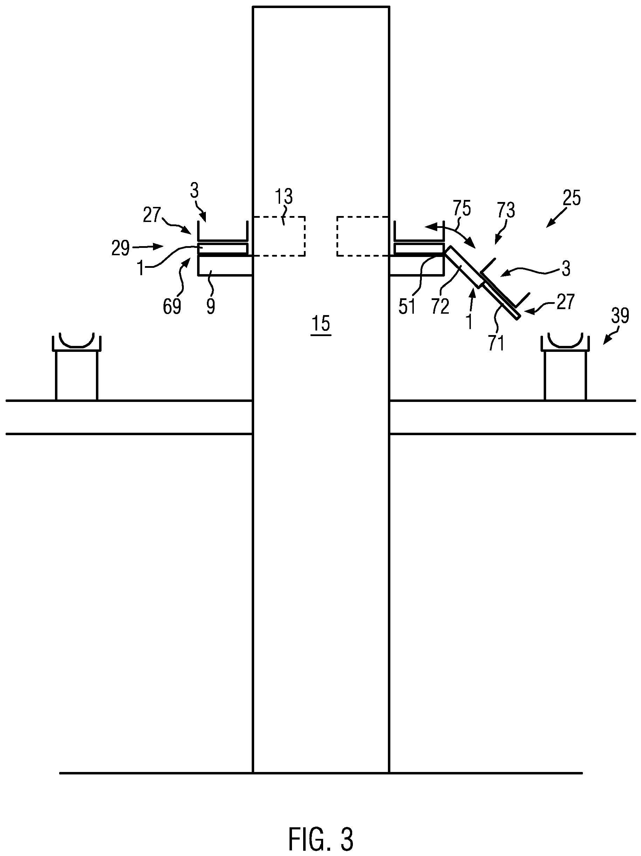

Eine weitere Ausführungsform der Handhabungseinrichtung 1 ist schematisch in der Fig. 3 dargestellt. Bei dieser Ausführungsform sind die Tablare 3 auf oder in einer Tablarhalterung 27 eines Förderwagens 69 abgelegt, während sie entlang der Transportbahn 9 transportiert werden. In den Förderwagen ist die Handhabungseinrichtung 1 integriert. In der Fig. 3 links ist die Handhabungseinrichtung 1 schematisch in der Ladestellung 29 dargestellt, in der das Tablar gleichzeitig mit Hilfe des Förderwagens 69 entlang der Transportbahn 9 transportiert wird.

In Fig. 3 ist auf der rechten Seite die Handhabungseinrichtung 1 in der Zugriffsstellung 23 dargestellt. Wie bei dem vorangegangenen Ausführungsbeispiel ist die Tablarhalterung 27 bzw. das Tablar 3 gegenüber der Ladestellung 27 geschwenkt, so dass das Tablar 3 vom Arbeitsplatz 39 aus leichter zugänglich ist. Die Schwenkachse 51 befindet sich ebenfalls unter der Tablarhalterung 27. Um die größere horizontale Distanz zwischen dem Arbeitsplatz 39 und der Förderbahn 9 zu überwinden und gleichzeitig die Tiefe des Förderwagens 69 klein zu halten, können teleskopierbare Elemente 71, 72 vorhanden sein, so dass die Tablarhalterung 27 an einem Teleskopauszug 73 angeordnet ist, der, wie durch den Pfeil 75 angedeutet ist, wenigstens bereichsweise um die Schwenkachse 51 verschwenkbar ist.

Selbstverständlich können anstelle eines Teleskopauszuges 73 auch andere Ausgestaltungen verwendet werden, wie beispielsweise ausfahrbare Scheren, um die translatorische Bewegung des Tablars 3 hin zum Arbeitsplatz 39 zu ermöglichen.

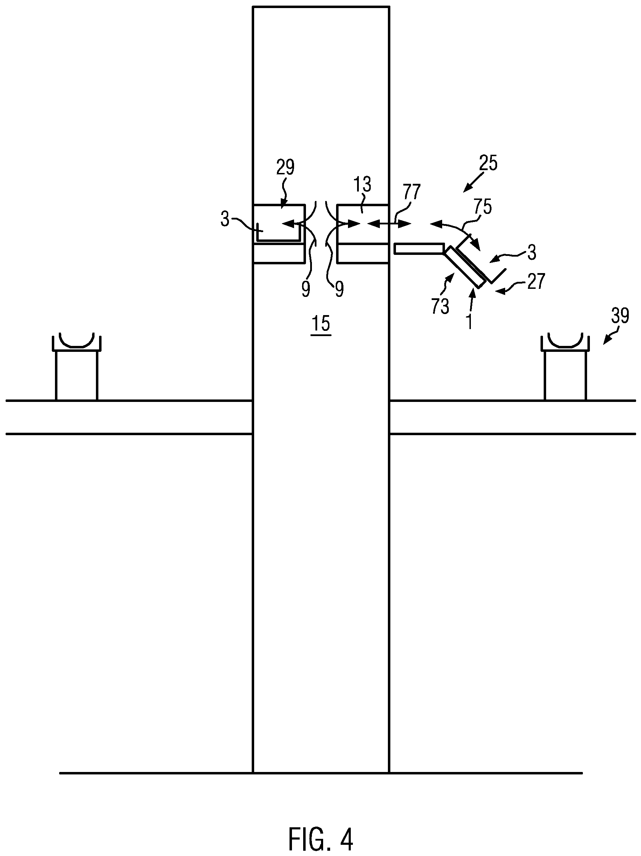

Eine ähnliche Ausgestaltung wie bei der Fig. 3 kann gemäß Fig. 4 verwendet werden, wenn die Handhabungseinrichtung 1 in einer Beschickungs- und Entnahmeöffnung 13 integriert ist. Auch hier kann ein Teleskopauszug 73 dazu verwendet werden, in einer geradlinigen Bewegung 77 den horizontalen Abstand zum Arbeitsplatz 39 in der Zugriffsstellung 25 zu überbrücken. Neben der horizontalen Bewegung 77 ist durch die Handhabungseinrichtung 1 auch eine Schwenkbewegung gemäß dem Pfeil 75 möglich, so dass das Tablar 3 mitsamt der Tablarhalterung 27 gekippt wird. Auch hier ist der Teleskopauszug 73 lediglich als ein Beispiel dafür angegeben, wie das Tablar 3 in einer Kippstellung am Arbeitsplatz 39 zur Verfügung gestellt werden kann.

Wie Fig. 4 ferner zeigt, ist in der Ladestellung 29 das Tablar 3 vom Inneren der Lagervorrichtung 15 in die Beschickungs- und/oder Entnahmeöffnung entlang der Transportbahn 9 überführbar.

### Bezugszeichen

- 1: Handhabungseinrichtung
- 3: Tablare
- 5: Lager- und/oder Kommissioniersystem
- 7: Bedienpersonal
- 9: Transportbahn
- 11: Übergabe
- 13: Bestückungs- und/oder Entnahmeöffnung
- 15: Lagervorrichtung
- 17: Lagergut
- 19: Stockwerke
- 21: Seiten der Lagervorrichtung
- 23: Förderband
- 25: Zugriffsstellung
- 27: Tablarhalterung
- 29: Ladestellung
- 31: hinterer Bereich eines Tablars
- 33: Höhenunterschied
- 35: Abstand
- 37: Armlänge
- 39: Arbeitsplatz
- 40: Vorderseite der Tablarhalterung
- 41: Kommissionierbehälter
- 43: Kommissionierband
- 45: Steuerungseinrichtung oder Schnittstelle der Handhabungseinrichtung
- 47: Steuereinheit des Lager- und/oder Kommissioniersystems
- 49: Fernsteuerung
- 51: Schwenkachse
- 53: Antriebsmotor der Schwenkachse
- 55: Gegengewicht
- 57: Überführungseinrichtung
- 59: Mitnehmer
- 61: Gegenelement
- 63: Abstand
- 65: mobile Handhabungseinrichtung
- 67: Räder
- 69: Förderwagen
- 71: teleskopierbares Element
- 72: teleskopierbares Element
- 73: Teleskopauszug
- 75: Pfeil
- 77: horizontale Bewegung

## Patentansprüche

1. Automatisches Lager- und/oder Kommissioniersystem (5) mit einer Transportbahn (9) zum Fördern von Tablaren (3) und einem Arbeitsplatz (39) zur manuellen Entnahme von Lagergut aus Tablaren durch Bedienpersonal (7), wobei sich zwischen der Transportbahn (9) und dem Arbeitsplatz (39) mehrere Handhabungseinrichtungen (1) entlang der Transportbahn (9) befinden, **dadurch gekennzeichnet, dass** die Handhabungseinrichtungen (1) jeweils eine Tablarhalterung (27) für wenigstens ein Tablar (3) aufweisen, wobei jede Tablarhalterung (27) von einer horizontalen Ladestellung (29), in der die Tablarhalterung (27) an die Transportbahn (9) zur Übergabe (11) von Tablaren (3) ankoppelbar ist, in eine horizontal von der Ladestellung (29) beabstandete Zugriffsstellung (25) schwenkbar angeordnet ist, wobei die Schwenkbewegung der Tablarhalterungen (27) senkrecht zur Förderrichtung der Transportbahn (9) verläuft, und dass die Tablarhalterung (27) in der Zugriffsstellung (25) von der Ladestellung (29) wegweisend geneigt ist.

2. Automatisches Lager- und/oder Kommissioniersystem (5) nach Anspruch 1, **dadurch gekennzeichnet, dass** der Arbeitsplatz (39) wenigstens eine Armlänge (37) von der Transportbahn (9) beabstandet ist.

3. Automatisches Lager- und/oder Kommissioniersystem (5) nach Anspruch 1 oder 2, **dadurch gekennzeichnet, dass** die Zugriffsstellung (25) sich näher am Arbeitsplatz als an der Transportbahn (9) befindet.

4. Automatisches Lager- und/oder Kommissioniersystem (5) nach einem der Ansprüche 1 bis 3, **dadurch gekennzeichnet, dass** vom Arbeitsplatz (39) aus betrachtet die Transportbahn (9) in einer Höhe von wenigstens 120 cm verläuft.

5. Automatisches Lager- und/oder Kommissioniersystem (5) nach einem der Ansprüche 1 bis 4, **dadurch gekennzeichnet, dass** in der Zugriffsstellung (25) sich ein Tablar (3) in der Tablarhalterung (27) unterhalb der Transportbahn (9) erstreckt.

6. Automatisches Lager- und/oder Kommissioniersystem (5) nach einem der Ansprüche 1 bis 5, **dadurch gekennzeichnet, dass** die Handhabungseinrichtungen (1) als an das Lager- und/oder Kommissioniersystem (5) anschließbare Module aufgebaut sind.

7. Automatisches Lager- und/oder Kommissioniersystem (5) nach einem der Ansprüche 1 bis 6, **dadurch gekennzeichnet, dass** die Tablarhalterung (27) in der Ladestellung (29) oberhalb der Zugriffsstellung (25) liegt.

8. Automatisches Lager- und/oder Kommissioniersystem (5) nach einem der Ansprüche 1 bis 7, **dadurch gekennzeichnet, dass** eine Schwenkachse (51) der Tablarhalterung (27) sich unterhalb der Tablarhalterung (27) befindet.

9. Automatisches Lager- und/oder Kommissioniersystem (5) nach einem der Ansprüche 1 bis 8, **dadurch gekennzeichnet, dass** jede Handhabungseinrichtung (1) einen Antriebsmotor (53) zum Schwenken der Tablarhalterung (27) umfasst.

10. Automatisches Lager- und/oder Kommissioniersystem (5) nach einem der Ansprüche 1 bis 9, **dadurch gekennzeichnet, dass** in der Ladestellung (29) eine zur Zugriffsstellung (25) weisende Vorderseite (40) der Tablarhalterung (27) wenigstens eine Armlänge (37) von ihrer Lage in der Zugriffsstellung (25) beabstandet ist.

11. Automatisches Lager- und/oder Kommissioniersystem (5) nach einem der Ansprüche 1 bis 10, **dadurch gekennzeichnet, dass** ein auf der Tablarhalterung (27) gehaltenes Tablar (3) in der Zugriffsstellung von oben und von der der Ladestellung (29) abgewandten Seite her zugänglich gekippt ist.

12. Automatisches Lager- und/oder Kommissioniersystem (5) nach einem der Ansprüche 1 bis 11, **dadurch gekennzeichnet, dass** in der Ladestellung (29) das Tablar (3) auf der Tablarhalterung (27) horizontal ausgerichtet ist.

13. Automatisches Lager- und/oder Kommissioniersystem (5) nach einem der Ansprüche 1 bis 12, **dadurch gekennzeichnet, dass** eine Halteeinrichtung zum Fixieren des Tablars (3) in oder auf der Tablarhalterung (27) vorgesehen ist und dass die Halteeinrichtung (27) fernsteuerbar ausgestaltet ist.

14. Automatisches Lager- und/oder Kommissioniersystem (5) nach einem der Ansprüche 1 bis 13, **dadurch gekennzeichnet, dass** eine mit einem Tablar (3) in Eingriff bringbar ausgestaltete Überführungseinrichtung (57) vorgesehen ist, durch die das Tablar (3) in der Ladestellung (29) auf oder in die Tablarhalterung (27) bewegbar ist.

## Claims

1. Automatic warehouse and/or order picking system (5) comprising a conveyor track (9) for conveying trays (3) and a work space (39) for the manual removal of stored goods from trays by operating personnel (7), a plurality of handling devices (1) being located along the conveyor track (9) between the conveyor track (9) and the work space (39), **characterised in that** the handling devices (1) each comprise a tray holder (27) for at least one tray (3), each tray holder (27) being arranged so as to be able to pivot from a horizontal loading position (29), in which the tray holder (27) can be coupled to the conveyor track (9) for transferring (11) trays (3), into an access position (25) that is horizontally spaced from the loading position (29), the pivot movement of the tray holder (27) extending perpendicularly to the conveying direction of the conveyor track (9), and **in that** the tray holder (27) in the access position (25) is inclined away from the loading position (29).

2. Automatic warehouse and/or order picking system (5) according to claim 1, **characterised in that** the work space (39) is spaced at least one arm's length (37) from the conveyor track (9).

3. Automatic warehouse and/or order picking system (5) according to either claim 1 or claim 2, **characterised in that** the access position (25) is located nearer to the work space than to the conveyor track (9).

4. Automatic warehouse and/or order picking system (5) according to any of claims 1 to 3, **characterised in that**, viewed from the work space (39), the conveyor track (9) extends at a height of at least 120 cm.

5. Automatic warehouse and/or order picking system (5) according to any of claims 1 to 4, **characterised in that**, in the access position (25), a tray (3) in the tray holder (27) extends under the conveyor track (9).

6. Automatic warehouse and/or order picking system (5) according to any of claims 1 to 5, **characterised in that** the handling devices (1) are constructed as modules that can be connected to the warehouse and/or order picking system (5).

7. Automatic warehouse and/or order picking system (5) according to any of claims 1 to 6, **characterised in that** the tray holder (27) in the loading position (29) is positioned above the access position (25).

8. Automatic warehouse and/or order picking system (5) according to any of claims 1 to 7, **characterised in that** a pivot axis (51) of the tray holder (27) is located under the tray holder (27).

9. Automatic warehouse and/or order picking system (5) according to any of claims 1 to 8, **characterised in that** each handling device (1) comprises a drive motor (53) for pivoting the tray holder (27).

10. Automatic warehouse and/or order picking system (5) according to any of claims 1 to 9, **characterised in that**, in the loading position (29), a front side (40) of the tray holder (27) that faces the access position (25) is spaced at least one arm's length (37) from its location in the access position (25).

11. Automatic warehouse and/or order picking system (5) according to any of claims 1 to 10, **characterised in that** a tray (3) held on the tray holder (27) in the access position can be tilted so as to be accessible from above and from the side facing away from the loading position (29).

12. Automatic warehouse and/or order picking system (5) according to any of claims 1 to 11, **characterised in that**, in the loading position (29), the tray (3) is oriented horizontally to the tray holder (27).

13. Automatic warehouse and/or order picking system (5) according to any of claims 1 to 12, **characterised in that** a holding device is provided for securing the tray (3) in or on the tray holder (27) and **in that** the holding device (27) is designed to be remotely controllable.

14. Automatic warehouse and/or order picking system (5) according to any of claims 1 to 13, **characterised in that** a transfer device (57) designed to be engageable with a tray (3) is provided, by means of which transfer device the tray (3) in the loading position (29) can be moved onto or into the tray holder (27).

## Revendications

1. Système automatique de stockage et/ou de préparation de commandes (5) comprenant une voie de transport (9) pour transporter des bacs (3) (également dits tablars), et un poste de travail (39) pour le prélèvement manuel, dans les bacs, de marchandises stockées, par le personnel de service (7), système dans lequel entre la voie de transport (9) et le poste de travail (39), se trouvent plusieurs dispositifs de manutention (1) le long de la voie de transport (9), **caractérisé en ce que** les dispositifs de manutention (1) présentent respectivement chacun un support de bac (27) pour au moins un bac (3), **en ce que** chaque support de bac (27) est agencé de manière à pouvoir pivoter à partir d'une position de chargement horizontale (29), dans laquelle le support de bac (27) peut être accouplé à la voie de transport (9) pour le transfert (11) de bacs (3), à une position d'accès (25) espacée horizontalement de la position de chargement (29), le mouvement de pivotement des supports de bac (27) s'étendant perpendiculairement à la direction de transport de la voie de transport (9), et **en ce que** dans la position d'accès (25), le support de bac (27) est incliné dans une position s'éloignant de la position de chargement (29).

2. Système automatique de stockage et/ou de préparation de commandes (5) selon la revendication 1, **caractérisé en ce que** le poste de travail (39) est espacé d'au moins une longueur de bras (37) de la voie de transport (9).

3. Système automatique de stockage et/ou de préparation de commandes (5) selon la revendication 1 ou la revendication 2, **caractérisé en ce que** la position d'accès (25) se trouve plus proche du poste de travail que de la voie de transport (9).

4. Système automatique de stockage et/ou de préparation de commandes (5) selon l'une des revendications 1 à 3, **caractérisé en ce que** vu du poste de travail (39), la voie de transport (9) s'étend à une hauteur d'au moins 120 cm.

5. Système automatique de stockage et/ou de préparation de commandes (5) selon l'une des revendications 1 à 4, **caractérisé en ce que** dans la position d'accès (25), un bac (3) dans le support de bac (27) s'étend à un niveau en-dessous de la voie de transport (9).

6. Système automatique de stockage et/ou de préparation de commandes (5) selon l'une des revendications 1 à 5, **caractérisé en ce que** les dispositifs de manutention (1) sont réalisés sous la forme de modules pouvant être raccordés au système de stockage et/ou de préparation de commandes (5).

7. Système automatique de stockage et/ou de préparation de commandes (5) selon l'une des revendications 1 à 6, **caractérisé en ce que** dans la position de chargement (29), le support de bac (27) se trouve à un niveau au-dessus de la position d'accès (25).

8. Système automatique de stockage et/ou de préparation de commandes (5) selon l'une des revendications 1 à 7, **caractérisé en ce qu'**un axe de pivotement (51) du support de bac (27) se trouve en-dessous du niveau du support de bac (27).

9. Système automatique de stockage et/ou de préparation de commandes (5) selon l'une des revendications 1 à 8, **caractérisé en ce que** chaque dispositif de manutention (1) comprend un moteur d'entraînement (53) pour assurer le pivotement du support de bac (27).

10. Système automatique de stockage et/ou de préparation de commandes (5) selon l'une des revendications 1 à 9, **caractérisé en ce que** dans la position de chargement (29), un côté avant (40) du support de bac (27), qui est dirigé vers la position d'accès (25), est espacé d'au moins une longueur de bras (37) de sa localisation dans la position d'accès (25).

11. Système automatique de stockage et/ou de préparation de commandes (5) selon l'une des revendications 1 à 10, **caractérisé en ce qu'**un bac (3) maintenu sur le support de bac (27) est, dans la position d'accès, basculé de manière à être accessible par le haut et à partir du côté éloigné de la position de chargement (29).

12. Système automatique de stockage et/ou de préparation de commandes (5) selon l'une des revendications 1 à 11, **caractérisé en ce que** dans la position de chargement (29), le bac (3) est d'une orientation horizontale sur le support de bac (27).

13. Système automatique de stockage et/ou de préparation de commandes (5) selon l'une des revendications 1 à 12, **caractérisé en ce qu'**il est prévu un dispositif de maintien pour fixer le bac (3) dans ou sur le support de bac (27), et **en ce que** le dispositif de maintien (27) est d'une configuration permettant sa commande à distance.

14. Système automatique de stockage et/ou de préparation de commandes (5) selon l'une des revendications 1 à 13, **caractérisé en ce qu'**il est prévu un dispositif de transfert (57), qui peut être amené en prise avec un bac (3), et par lequel, dans la position de chargement (29), le bac (3) peut être déplacé sur ou dans le support de bac (27).
